# EUROPÄISCHE PATENTSCHRIFT

(11) **EP 2 619 712 B1**
(45) Veröffentlichungstag und Bekanntmachung des Hinweises auf die Patenterteilung: **30.10.2019**
(21) Anmeldenummer: 11769808.4
(22) Anmeldetag: 15.09.2011
(51) Int. Cl.: G06K 9/20, G06K 9/00

(54) **VERFAHREN UND VORRICHTUNG ZUR ERKENNUNG UND/ODER BEURTEILUNG DREIDIMENSIONALER ERHABENER STRUKTUREN AUF EINER OBERFLÄCHE EINES DOKUMENTS**
METHOD AND APPARATUS FOR DETECTING AND/OR ASSESSING THREE-DIMENSIONAL ELEVATED STRUCTURES ON A SURFACE OF A DOCUMENT
PROCÉDÉ ET DISPOSITIF DE DÉTECTION ET/OU D'ÉVALUATION DE STRUCTURES EN RELIEF TRIDIMENSIONNELLES SUR UNE SURFACE D'UN DOCUMENT

(30) Priorität: 22.09.2010 DE 102010046219
(43) Veröffentlichungstag der Anmeldung: 31.07.2013
(73) Patentinhaber: Bundesdruckerei GmbH, 10969 Berlin (DE)
(72) Erfinder: KRAMER, Thomas, 80805 München (DE); KRAMER, Ralf Stefan, 81675 München (DE); GROTEHUSMANN, Ulf, 85560 Ebersberg (DE); RICHTER, Werner, 80999 München (DE); RACKL, Christian, 80686 München (DE)
(74) Vertreter: Obst, Bernhard
(86) Internationale Anmeldenummer: PCT/EP2011/066023
(87) Internationale Veröffentlichungsnummer: WO 2012/038321

(56) Entgegenhaltungen:
- HENTZSCHEL T W ET AL: "An optical reading system for embossed braille characters using a twin shadows approach", JOURNAL OF MICROCOMPUTER APPLICATIONS, ACADEMIC PRESS, Bd. 18, Nr. 4, 1. Oktober 1995 (1995-10-01), Seiten 341-354, XP004914607, ISSN: 0745-7138, DOI: 10.1016/S0745-7138(05)80034-X

## Beschreibung

Die Erfindung betrifft ein Verfahren und eine Vorrichtung, mit denen es möglich ist, erhabene Strukturen auf einer Oberfläche eines im Wesentlichen planen Dokuments zu erkennen und/oder zu beurteilen.

Im Stand der Technik sind eine Reihe von Dokumenten bekannt, die beispielsweise Ausweise, Pässe, Personalausweise, Zugangskarten, Identifikationsdokumente, Führerscheine, Visa, Kreditkarten, Bankkarten und andere Wertdokumente, wie Wertpapiere, Banknoten, Telefonkarten, Postwertzeichen, oder auch Sicherungsetiketten und Ähnliches umfassen, um nur einige zu nennen. Um solche Dokumente gegen Manipulationen, Nachahmungen, Fälschungen und/oder Verfälschungen und/oder ein Duplizieren zu sichern, werden Dokumente mit Merkmalen versehen, die eben dieses verhindern oder sogar unmöglich machen sollen. Solche Merkmale, die ein Nachahmen, Verfälschen, Duplizieren usw. zumindest erschweren, werden als Sicherheitsmerkmale bezeichnet. In der Regel weisen Dokumente eine Vielzahl unterschiedlicher Sicherheitsmerkmale auf, die einzeln und/oder in Kombination das Dokument gegen Verfälschung, Nachahmung oder Duplizierung schützen.

Sicherheitsmerkmale können sehr unterschiedliche Ausgestaltungen annehmen. Ein Sicherheitsmerkmal kann beispielsweise das Material darstellen, aus dem das Dokument gefertigt ist. Andere Sicherheitsmerkmale umfassen optisch nachzuweisende Merkmale, beispielsweise Hologramme, so genannte optische variable Farben, Durchsichtpasser, Guillochendruck, um nur einige aufzuzählen. Eine Gruppe von Sicherheitsmerkmalen stellen taktile Merkmale dar, wobei eine Untergruppe erhabene Strukturen umfasst. Diese können haptisch erfasst werden.

Als erhabene Strukturen werden solche Strukturen angesehen, die gegenüber einem allgemein vorherrschenden Oberflächenniveau einer Oberfläche des Dokuments vorspringen. In der Regel weist eine Oberfläche eines Dokuments eine glatte und ebene Oberfläche auf. Erhabene Strukturen sind solche, die aus dieser glatten Oberfläche vorspringen und Abmessungen aufweisen, die deutlich größer als die mittlere Oberflächenrauigkeit der Oberfläche sind.

Ein Beispiel für erhabene Strukturen ist beispielsweise die Blindenschrift, Brailleschrift genannt.

Während die sphärisch erhaben vorspringenden Punkte der Brailleschrift eine relativ große Höhe von in der Regel etwa 0,45 mm aufweisen, wird bei Sicherheitsdokumenten auch eine Vielzahl erhabener Strukturen verwendet, die eine sehr viel geringere Höhe gegenüber dem umgebenden Oberflächenniveau der Dokumentoberfläche aufweisen.

Eine Vielzahl von Dokumenten, die eine besonders hohe Fälschungssicherheit aufweisen sollen, wird heutzutage auf Kunststoffbasis hergestellt. Hierbei wird häufig ein sogenannter Dokumentkörper erzeugt, der aus einer oder vorzugsweise mehreren Kunststofffolien zusammengefügt ist. Das Zusammenfügen kann beispielsweise mittels eines Hochdruckhochtemperaturlaminationsverfahrens erfolgen. Häufig werden solche Dokumentkörper heute so hergestellt, dass eine oder mehrere der verwendeten Folien so ausgebildet sind, dass diese mittels Laserstrahlung markiert werden können. In der Regel weisen diese Folien Stoffe auf, welche einer Absorption von Laserstrahlung eines oder mehrerer Wellenlängen begünstigt und hierüber lokal Energie in den Dokumentkörper deponiert werden kann. Je nach deponierter Energiemenge und/oder Leistung wird dann lokal die Kunststoffstruktur zerstört, was in der Regel zu einer Schwärzung des Kunststoffs führt. Die Markierung kann jedoch auch so ausgeführt werden, dass zusätzlich zu der Schwärzung eine Ausdehnung des zerstörten Kunststoffmaterials stattfindet. Diese Ausdehnung kann dann zu erhabenen Strukturen an der Oberfläche des Dokuments führen. Dies gilt selbst dann, wenn eine obere Schutzschicht des Dokumentkörpers durch die Laserstrahlung nicht direkt geschwärzt und/oder zerstört wird.

Die Erzeugung solcher erhabener und taktil wahrnehmbarer Oberflächenstrukturen ist sensibel von den Produktionsparametern bei der Herstellung bzw. Markierung des Dokuments abhängig. Daher ist es wünschenswert, eine Qualitätskontrolle während der Herstellung der Dokumente möglichst in der Fertigungslinie und an jedem der Dokumente ausführen zu können.

In dem Artikel "An optical reading system for embossed Braille characters using a twin shadows approach" von T. W. Hentzschel et al., Journal of Microcomputer Applications, Academic Press Limited, Band 18, Nr. 4, Seiten 341 bis 354 vom 1. Oktober 1995 ist die Erfassung von in Blindenschrift (Braille-Schrift) erstellten Dokumenten beschrieben.

Im Stand der Technik sind Verfahren bekannt, bei denen mit gerichtetem Licht, beispielsweise Laserstrahlung, die Dokumentoberfläche in einem Abtastprozess mit einer linienförmigen Beleuchtung abgetastet wird. Hierbei erfolgt die Einstrahlung unter einem von einer Oberflächennormale der Oberfläche des Dokuments abweichenden Richtung. Hinsichtlich der Festlegung der Oberflächennormale wird die Oberfläche des Dokuments als ebene glatte Fläche betrachtet. Während des Abscannens der Oberfläche werden nacheinander mehrere Abbildungen erfasst. Weist die Oberfläche erhabene Strukturen auf, so sind in den einzelnen Abbildungen an jenen Stellen, an denen sich die erhabenen Strukturen befinden, Abweichungen der auf dem Dokument reflektierten linienförmigen Ausleuchtung von einer Geraden zu erkennen. Mittels einer Auswerteeinrichtung werden somit diese Abweichungen bestimmt und zur Erkennung und/oder Beurteilung der erhabenen Strukturen ausgewertet und verwendet.

Nachteilig an dem bekannten Verfahren und der bekannten Vorrichtung ist, dass eine dynamische Ausleuchtung der Oberfläche des Dokuments notwendig ist, bei der ein gerader Lichtstreifen einmal über die gesamte Oberfläche des Dokuments "bewegt" werden muss. Ein Durchsatz durch eine solche Prüf- und/oder Erkennungsvorrichtung ist somit begrenzt, so dass derzeit eine Prüfung jedes Dokuments während der Herstellung wirtschaftlich nicht möglich ist.

Der Erfindung liegt somit die Aufgabe zugrunde, ein verbessertes Verfahren und eine verbesserte Vorrichtung zur Erkennung und/oder Beurteilung von erhabenen Strukturen auf einer Oberfläche eines Dokuments zu schaffen.

Die Aufgabe wird erfindungsgemäß durch die Gegenstände mit den Merkmalen der Patentansprüche 1 und 4 gelöst. Vorteilhafte Ausgestaltungen der Erfindung ergeben sich aus den Unteransprüchen.

### Grundidee der Erfindung

Der Erfindung liegt der Gedanke zugrunde, die Oberfläche des Dokuments nacheinander unterschiedlich flächig, jedoch starr auszuleuchten und für jede der unterschiedlichen Beleuchtungen jeweils eine flächige Abbildung der Oberfläche des Dokuments zu erfassen. Hierbei kann die gesamte Oberfläche des Dokuments jeweils zeitgleich ausgeleuchtet und erfasst werden. Eine Zeitdauer zum Erfassen der einzelnen unterschiedlichen Abbildungen ist somit im Wesentlichen durch die Erfassungszeit einer flächigen Abbildung der verwendeten Kamera festgelegt. Die mindestens zwei Abbildungen, die für unterschiedliche Beleuchtungen der Oberfläche des Dokuments erfasst werden, werden anschließend gemeinsam ausgewertet, um die durch die Erhebungen verursachten Merkmale in den Abbildungen zu ermitteln und isolieren zu können und hierüber die erhabenen Strukturen zu erkennen und/oder zu beurteilen. Vorteil der Erfindung ist es, dass eine wesentlich geringere Anzahl, im Extremfall nur zwei, Abbildungen der Oberfläche für die mindestens zwei unterschiedlichen Beleuchtungsarten, d.h. je eine Abbildung für jede der mindestens zwei Beleuchtungsarten, zu erfassen und auszuwerten sind. Hierdurch kann ein Durchsatz des Verfahrens bzw. der Vorrichtung deutlich gesteigert werden. Die einzelnen Beleuchtungen können in dem Sinne starr ausgeführt werden, dass die Oberfläche bei der Ausleuchtung jeweils zeitgleich flächig ausgeleuchtet wird und nicht mit dem zur Beleuchtung verwendeten Licht dynamisch überstrichen werden muss. Hierdurch kann ein mechanischer Aufbau robuster ausgestaltet werden.

Als vorteilhafte Beleuchtungsart neben streifenden Beleuchtungen aus unterschiedlichen Richtungen hat sich eine Beleuchtung herausgestellt, bei der die Oberfläche flächig mit diffusem Licht ausgeleuchtet wird. Erfindungsgemäß ist daher eine der unterschiedlichen Beleuchtungsarten mindestens eine Beleuchtung, bei der die Oberfläche mit diffusem Licht vollflächig gleichmäßig ausgeleuchtet wird. Eine Beleuchtungseinheit, die neben der, hinter der oder die Kamera umgebend ausgebildet ist und beispielsweise eine Mattscheibe oder einen anderen diffusen Streuer umfasst, kann eine solche Beleuchtung bewirken. Die Abbildung, die bei diffusem Licht erfasst ist, kann insbesondere als Referenz dienen, da in dieser Abbildung weder Schlagschatten noch Reflexionsprofile erscheinen sollten. Insbesondere wenn in den einzelnen erfassten Abbildungen durch andere Sicherheitsmerkmale als die erhabenen Strukturen verursachte Merkmale aufgezeichnet werden, ist dies von Vorteil.

### Definitionen

Als erhabene Strukturen werden jene Strukturen angesehen, die entlang einer Oberflächennormale der Oberfläche des Dokuments gegenüber einem mittleren Niveau und/oder einem hauptsächlich vorherrschenden Niveau der Oberfläche um einen Betrag hervorspringen, der größer als eine durch eine allgemeine Oberflächenrauheit der Oberfläche bedingte Niveauschwankung der Oberfläche ist.

Als Licht wird elektromagnetische Strahlung aufgefasst, deren Wellenlänge im infraroten, sichtbaren oder ultravioletten Wellenlängenbereich liegt.

Als streifender Lichteinfall wird ein Lichteinfall angesehen, bei dem der Lichteinfall als ein Strahlenbündel idealisiert werden kann, und die Einzelstrahlen des Strahlenbündels, die auf die Oberfläche des Dokuments auftreffen, gegenüber einer Normalen der Oberfläche einen Winkel aufweisen, der größer als 45°, bevorzugt größer als 75° und am bevorzugtesten größer als 80° ist.

Als Lichteinfall aus einer Richtung wird ein Lichteinfall angesehen, bei dem das Licht durch ein Strahlenbündel idealisiert werden kann und die Strahlung idealisiert als von einer idealisierten punkt- oder linienförmigen Lichtquelle ausgehend angesehen werden kann. Eine linienförmige Lichtquelle wird hierbei als im Wesentlichen geradlinig angesehen. Aus einer Richtung beleuchten bedeutet somit, die Beleuchtung mit einem Lichtkegel vorzunehmen, welcher einzelne Lichtstrahlen umfasst, die zu einer festgelegten Raumrichtung vektorgeometrisch eine Abweichung aufweisen, die geringer als ein festgelegter, begrenzter Raumwinkelbereich ist.

Als Oberflächennormale der Oberfläche des Dokuments wird eine Normale zu der trotz der Erhebungen und Unebenheiten als glatt und eben idealisiert angenommenen Oberfläche betrachtet.

Als Erfassen einer Abbildung während einer Beleuchtung wird auch ein Erfassen verstanden, bei dem der Erfassungszeitraum der Abbildung den Beleuchtungszeitraum wie bei einer Blitzlichtfotografie umfasst.

Flächiges Beleuchten ist ein Beleuchten, bei dem die beleuchtete Fläche zeitgleich an jedem Ort der Fläche beleuchtet wird.

Als Erfassen einer flächigen Abbildung wird hier ein Vorgang verstanden, die dem eine Fläche zeitgleich abbildend erfasst wird.

### Bevorzugte Ausführungsformen

Insbesondere wird ein Verfahren zur Erkennung und/oder Beurteilung dreidimensionaler erhabener Strukturen auf einer Oberfläche eines Dokuments vorgeschlagen, welches die Schritte umfasst: Beleuchten der Oberfläche mit Licht; Erfassen einer Abbildung der Oberfläche, während die Oberfläche beleuchtet wird, und Auswerten der erfassten Abbildung zum Ermitteln der erhabenen Strukturen, wobei vorgesehen ist, dass die Oberfläche auf mindestens zwei unterschiedliche Arten flächig beleuchtet wird und für jede der unterschiedlichen Beleuchtungsarten mindestens eine flächige Abbildung der Oberfläche erfasst wird und die mehreren so erfassten flächigen Abbildungen gemeinsam ausgewertet werden. Somit wird die Oberfläche nacheinander auf zwei oder mehrere unterschiedliche Arten jeweils flächig beleuchtet und für jede dieser unterschiedlichen Beleuchtungen während der Ausleuchtung eine Abbildung der Oberfläche erfasst, die diese flächig abbildet.

Besonders bevorzugt wird für jede der unterschiedlichen Beleuchtungsarten genau eine flächige Abbildung der Oberfläche erfasst. Auf diese Weise erhält man ein besonders schnelles und zeitsparendes Verfahren. Die Ausleuchtung bei den einzelnen unterschiedlichen Beleuchtungsarten ist in dem Sinne starr, dass die jeweilige Beleuchtungsart während der Aufnahme nicht verändert wird und jeweils die Oberfläche, die erfasst wird, vollflächig zeitgleich ausleuchtet.

Ebenso wird eine Vorrichtung zur Erkennung und/oder Beurteilung von dreidimensionalen erhabenen Strukturen auf einer Oberfläche eines Dokuments vorgeschlagen, welche eine Beleuchtungseinrichtung, eine Kamera zum Erfassen einer flächigen Abbildung der Oberfläche des Dokuments und eine Auswerteeinrichtung zum Auswerten der erfassten Abbildung und Ermitteln erhabener Strukturen umfasst, wobei die Beleuchtungseinrichtung und die Kamera so zueinander ausgerichtet sind, dass die Kamera die Abbildung während der Beleuchtung der Oberfläche durch die Beleuchtungseinrichtung erfassen kann. Hierbei ist vorgesehen, dass die Beleuchtungseinrichtung ausgebildet ist, die Oberfläche auf mindestens zwei unterschiedliche Arten jeweils flächig zu beleuchten, und die Kamera ausgebildet ist, während der unterschiedlichen Beleuchtungen jeweils mindestens eine flächige Abbildung der Oberfläche zu erfassen, und die Auswerteeinrichtung ausgebildet ist, die unterschiedlichen Abbildungen gemeinsam auszuwerten. Vorzugsweise wird für jede der unterschiedlichen Beleuchtungen jeweils genau eine flächige Abbildung der Oberfläche erfasst. Eine solche Vorrichtung benötigt keine Mittel, um eine dynamische partielle Ausleuchtung der Dokumentoberfläche ausführen zu können. Hierdurch kann ein kompakter und robuster Aufbau realisiert werden, der geeignet ist, in eine Produktionseinrichtung integriert zu werden.

Um die unterschiedlichen Beleuchtungsarten zu realisieren, umfasst die Beleuchtungseinrichtung vorzugsweise mehrere Beleuchtungseinheiten, mittels deren isolierten Betriebs jeweils eine der Beleuchtungsarten bewirkbar ist. Vorzugsweise ist somit für jede Beleuchtungsart eine eigene Beleuchtungseinheit in der Beleuchtungseinrichtung vorgesehen. Bei anderen Ausführungsformen kann jedoch vorgesehen sein, dass mehrere Beleuchtungseinheiten in Kombination betrieben werden, um eine Beleuchtungsart, d.h. eine Beleuchtung in einer bestimmten Weise, zu erzeugen.

Um in den Abbildung Merkmale zu erzeugen, welche auf die erhabenen Strukturen zurückzuführen sind, ist es besonders vorteilhaft, dass die Oberfläche auf unterschiedliche Art beleuchtet wird, indem die Oberfläche aus unterschiedlichen Richtungen mit Licht unter streifendem Einfallswinkel beleuchtet wird.

Um die Beleuchtung aus unterschiedlichen Richtungen zu realisieren, ist bei einer Ausführungsform der Erfindung vorgesehen, dass zumindest einige der Beleuchtungseinheiten entlang verschiedener Kanten eines Erfassungsbereichs der Kamera, in dem sich das Dokument während der Beleuchtung und Abbildungserfassung befindet, angeordnet sind. Um einen Streiflichteinfall aus unterschiedlichen Richtungen zu realisieren, sind diese mindestens einigen Beleuchtungseinheiten vorzugsweise ferner so ausgebildet, dass diese jeweils die Oberfläche des Dokuments, wenn diese Oberfläche sich in dem Erfassungsbereich der Kamera befindet, flächig mit Licht unter streifendem Einfallswinkel aus einer Richtung beleuchten.

Besonders bevorzugt werden unterschiedliche Beleuchtungsarten genutzt, die paarweise Beleuchtungen umfassen, wobei die unterschiedlichen Beleuchtungen eines solchen Paars die Oberfläche aus einander diametral entgegengesetzten Richtungen unter streifendem Einfallswinkel beleuchten. Die Oberfläche wird somit nacheinander aus entgegengesetzten Richtungen beleuchtet und jeweils eine Abbildung erfasst. In diesem Fall wird unter diametral entgegengesetzten Richtungen verstanden, dass bei einer Projektion dieser Richtungen in eine Ebene der Dokumentoberfläche diese zueinander im Wesentlichen kollinear und einander entgegengerichtet sind. Hierzu ist es vorteilhaft, zumindest ein Paar der zumindest einigen Beleuchtungseinheiten an diametral entgegengesetzten Seiten des Erfassungsbereichs anzuordnen.

Besonders bevorzugt wird die Beleuchtung unter streifendem Einfallswinkel mit einem Lichtkegel ausgeführt, die ein, hinsichtlich einer Lichtintensität, nahezu homogenes rechteckiges Querschnittsprofil aufweist. Hierzu umfassen die zumindest einigen Beleuchtungseinheiten bei einer Ausführungsform jeweils eine Optik, die ein Profil eines Beleuchtungskegels formt.

Die Beleuchtungseinheiten können jeweils ein oder mehrere Leuchtmittel umfassen. Als besonders bevorzugt hinsichtlich Langlebigkeit und Steuerbarkeit haben sich Leuchtdioden erwiesen. Insbesondere kann eine Beleuchtungseinheit mehrere entlang einer Strecke angeordnete Leuchtmittel, vorzugsweise Leuchtdioden, aufweisen.

Um ein möglichst homogenes rechteckiges Strahlprofil für eine streifende Beleuchtung der Oberfläche des Dokuments zu erzeugen, wenn sich dieses im Erfassungsbereich befindet, können die Optiken einiger, mehrerer oder aller Beleuchtungseinheiten zumindest eine Zylinderlinse umfassen. Bei einer Ausführungsform sind Achsen der Zylinderlinsen parallel zu Seitenkanten des Dokuments bzw. Seitenkanten des Erfassungsbereichs ausgerichtet.

Der Erfassungsbereich der Kamera ist vorzugsweise so festgelegt, dass die Kamera eine Draufsicht der Oberfläche erfasst. Der Erfassungsbereich wird hier als idealisierter Ausschnitt einer Ebene angesehen, in dem sich die Oberfläche während der Untersuchung befindet. Zum Erfassen einer Draufsicht wird somit im Wesentlichen parallel zu einer Oberflächennormalen des Erfassungsbereichs von der Kamera auf die Dokumentoberfläche geblickt. Besonders bevorzugt wird ein Mittelpunkt des Erfassungsbereichs, und somit ein Mittelpunkt der Oberfläche des Dokuments, in einer Mitte der Abbildungen abgebildet. Der Vorteil einer Erfassung der Oberfläche als eine Draufsicht liegt darin, dass die Oberfläche und die Merkmale im Wesentlichen verzerrungsfrei erfasst werden. Dies ist insbesondere für eine Erkennung von codierten Inhalten durch die räumliche Ausgestaltung der Erhebungen, beispielsweise in Form eines Schriftzugs und/oder einer geometrischen Figur, von Vorteil. Der Erfassungsbereich der Kamera wird somit hier idealisiert jeweils als ein ebener, in der Regel rechteckiger bzw. an die geometrische Form der erfassten Abbildung angepasster, Bereich angesehen.

In der Regel wird sich das Dokument und somit die Dokumentoberfläche während des unterschiedlichen Beleuchtens und zeitgleichen Erfassens der unterschiedlichen Abbildungen relativ zu der Kamera und der Beleuchtungseinrichtung und somit deren Beleuchtungseinheiten in Ruhe befinden. Hierdurch wird sichergestellt, dass in den unterschiedlichen Abbildungen jeweils derselbe Ort der Oberfläche an derselben Stelle in den jeweiligen Abbildungen abgebildet ist. Es ist jedoch auch denkbar, das Dokument während der Untersuchung zu bewegen. Hierbei sollte eine konstante gleichförmige Bewegung der Oberfläche parallel zu dem Erfassungsbereich, d.h. im Erfassungsbereich, stattfinden. Besonders bevorzugt wird dann die Erfassung der unterschiedlichen Abbildungen mit der Bewegung so synchronisiert, dass bei einer digitalen Kameraeinheit zwischen den unterschiedlichen Abbildungen der Ort in den unterschiedlichen Abbildungen jeweils um einen definierten Pixelabstand entlang einer Bewegungsrichtung, welche zu einer Symmetrierichtung der Pixelanordnung der Kamera korrespondiert, verschoben ist. Sind die Pixel wie üblich in Zeilen und Reihen angeordnet, so erfolgt die Bewegung vorzugsweise parallel zu den Reihen oder parallel zu den Spalten. Schiefwinklige Bewegungsrichtungen zu den Zeilen oder Spalten machen einen höheren Rechenaufwand bei der Auswertung erforderlich.

Besonders bevorzugt werden beim Auswerten jeweils mindestens zwei der unterschiedlichen Abbildungen miteinander verglichen, um anhand der aufgefundenen Unterschiede die erhabenen Strukturen zu ermitteln. Beim Auswerten werden vorzugsweise Schlagschatten und/oder Reflexionsprofile isoliert.

Bei auf Kunststoffbasis hergestellten Dokumenten, beispielsweise auf Polykarbonat-Basis, sind die erhabenen Strukturen, welche durch eine Laserschwärzung verursacht sind, im infraroten Wellenlängenbereich gut zu erkennen. Daher ist bei einer Ausführungsform vorgesehen, dass Leuchtmittel verwendet werden, die Licht im infraroten Wellenlängenbereich emittieren.

Das Verfahren wird vorzugsweise voll automatisiert ausgeführt. Eine Steuereinrichtung steuert hierbei sowohl die Beleuchtungseinrichtung und die Kamera als auch die Auswerteinrichtung. Diese erkennt und beurteilt die erhabenen Strukturen.

Bei einer Ausführungsform werden bei der Auswertung ermittelte Daten mit Vorgabedaten verglichen, die auf der Oberfläche erwarteten erhabenen Strukturen zugeordnet sind, und anhand des Vergleichs eine Qualitätsbewertung der erhabenen Strukturen auf der Oberfläche des Dokuments vorgenommen. Anhand dieser Beurteilung kann das Dokument als den Qualitätserfordernissen entsprechend oder als mangelhaft gekennzeichnet werden. Ebenso kann die Beurteilung genutzt werden, um auf den Produktionsprozess zurückzuwirken. Die Vorgabedaten präsentieren in einem solchen Fall die Merkmale, die die erhabenen Strukturen bei der Auswertung in den einzelnen Abbildungen bzw. nach entsprechender Auswertung erzeugen sollen.

Weitere Vorteile der Erfindung ergeben sich aus der nachfolgenden detaillierten Beschreibung bevorzugter Ausführungsformen, die im Zusammenhang mit einer Zeichnung näher erläutert werden. Hierbei zeigen:
- Fig. 1: eine schematische Darstellung einer Vorrichtung zum Erkennen und/oder Beurteilen erhabener Strukturen einer Dokumentoberfläche;
- Fig. 2: eine schematische Darstellung einer streifenden Beleuchtung der Dokumentfläche mit einer Beleuchtungseinheit nach einer ersten Ausführungsform;
- Fig. 3: eine schematische Darstellung zur Erläuterung der Beleuchtung der Oberfläche unter streifenden Einfall mit einer Beleuchtungseinheit nach einer anderen Ausführungsform;
- Fig. 4: eine schematische Darstellung eines Ablaufdiagramms einer Ausführungsform des Verfahrens zur Erkennung und/oder Beurteilung von erhabenen Strukturen auf einer Dokumentoberfläche;
- Fig. 5: eine Abbildung eines Dokuments mit taktilen erhaben Strukturen, deren Taktizität von rechts nach links zunimmt, wobei die Abbildung während einer Beleuchtung der Oberfläche mit Streiflicht von links erfasst ist;
- Fig. 6: eine Abbildung desselben Dokuments wie in Fig. 5, wobei die Abbildung während einer Beleuchtung der Oberfläche des Dokuments mit Streiflicht von rechts erfasst ist; und
- Fig. 7: eine Differenzabbildung der Abbildungen der Fig. 5 und 6, so dass die durch die erhabenen Strukturen hervorgerufenen Merkmale deutlich erkennbar sind.

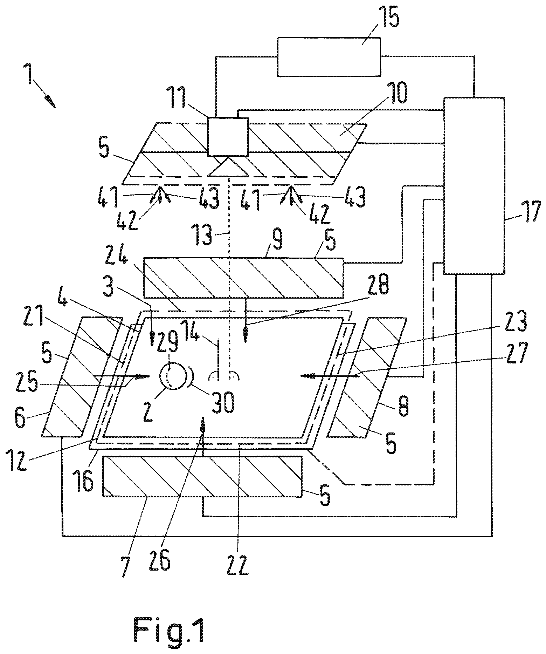

In Fig. 1 ist eine Vorrichtung 1 zur Erkennung und/oder Beurteilung dreidimensionaler erhabener Strukturen 2 auf einer Oberfläche 3 eines Dokuments 4 schematisch dargestellt. Die Vorrichtung 1 umfasst eine Beleuchtungseinrichtung 5, deren Bestandteile über eine Schraffur gekennzeichnet sind. In der dargestellten Ausführungsform umfasst die Beleuchtungseinrichtung 5 insgesamt fünf verschiedene Beleuchtungseinheiten 6 - 10. Diese sind relativ zueinander so angeordnet, dass diese jeweils die Oberfläche 3 des Dokuments 4 einzeln vollflächig beleuchten können. Ferner umfasst die Vorrichtung 1 eine Kamera 11 zum flächigen Erfassen der Oberfläche 3 des Dokuments 4. Die Kamera 11 weist einen Erfassungsbereich 12 auf, welches ein virtueller Ausschnitt einer Ebene im Raum ist, in der sich die Oberfläche 3 des Dokuments 4 während der Untersuchung, und somit während des Erfassens von Abbildungen durch die Kamera 11, befindet. Vorzugsweise ist der Erfassungsbereich 12 so dimensioniert, dass die Oberfläche 3 des Dokuments 4 vollflächig erfasst werden kann. Der Erfassungsbereich 12 der Kamera 11 ist der Bereich, den die Kamera beim Erfassen der Abbildung vorzugsweise scharf abbildet. Besonders bevorzugt ist die Kamera 11 so angeordnet, dass eine zentrale Betrachtungsrichtung 13 der Kamera unter einem rechten Winkel auf die Oberfläche 3 des Dokuments 4 fällt. Somit wird jeweils eine Draufsicht auf die Oberfläche 3 des Dokuments 4 beim Erfassen von Abbildungen mit der Kamera 11 erfasst. Die zentrale Beobachtungsrichtung 13 ist somit kollinear zu einer Oberflächennormalen 14 der Oberfläche 3 des Dokuments 4.

Die mittels der Kamera 11 erfassten Abbildungen werden von einer Auswerteinrichtung 15 ausgewertet, um anhand der optisch erfassten Merkmale die erhabene Struktur 2 zu erkennen und ggf. zu beurteilen. Das Dokument 4 kann beispielsweise auf einer Transporteinrichtung 16 angeordnet sein und mittels dieser zu- und abgeführt werden. Die Transporteinrichtung 16 kann, muss jedoch nicht Bestandteil der Vorrichtung 1 sein.

Die Beleuchtungseinrichtung 5 sowie die Beleuchtungseinheiten 6 - 10, die Kamera 11 und die Auswerteeinrichtung 15 und ggf. die Transporteinrichtung 16 werden von einer Steuereinrichtung 17 gesteuert. Während einige der Beleuchtungseinheiten 6 - 10, nämlich die Beleuchtungseinheiten 6 - 9, entlang von Kanten 21 - 24 des Erfassungsbereichs angeordnet sind, ist die Beleuchtungseinheit 10 oberhalb der Oberfläche 3, in dieser Ausführungsform die Kamera 11 umgebend, angeordnet. Hierbei sind die Beleuchtungseinheiten 6 und 8 sowie die Beleuchtungseinheiten 7 und 9 jeweils paarweise diametral einander gegenüberliegend von dem Erfassungsbereich 12 bzw. der Oberfläche 3 des Dokuments 4 während der Untersuchung angeordnet.

Die Beleuchtungseinheiten 6 - 9 sind jeweils ausgebildet, aus einer Richtung 25 - 28 die Oberfläche 3 des Dokuments 4 mit Licht unter streifendem Einfallswinkel flächig auszuleuchten. Die Beleuchtungseinheit 10 ist hingegen so ausgebildet, dass diese diffuses Licht erzeugt und die Oberfläche 3 des Dokuments 4 mit diffusem Licht vollflächig ausleuchtet.

Die Beleuchtungseinheit 10, welche eine diffuse Strahlung erzeugt, wie über die unterschiedlichen Richtungspfeile 41 - 43 angedeutet ist, umfasst beispielsweise ein oder mehrere Leuchtmittel sowie einen diffusen Streuer (nicht dargestellt), beispielsweise eine Mattscheibe, der zwischen den Leuchtmitteln (nicht dargestellt) und der Oberfläche 3 des Dokuments 4 angeordnet ist.

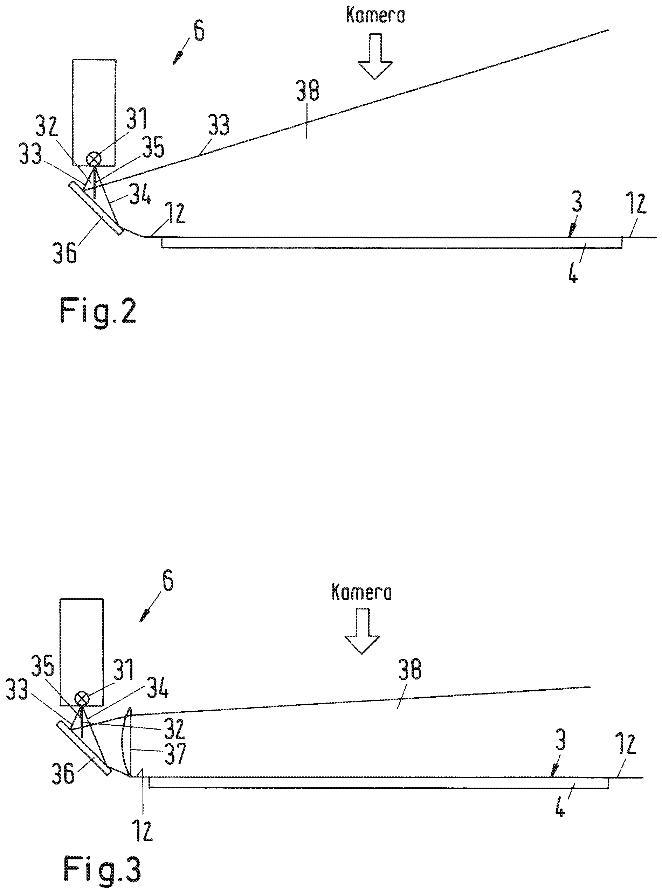

Fig. 2 ist schematisch eine Beleuchtungseinheit 6 dargestellt (gleiche technische Merkmale haben in unterschiedlichen Figuren dieselben Bezugszeichen), die entlang einer kurzen Kante eines Dokuments 4, welche senkrecht zur Zeichnungsebene verläuft, neben einem Dokument 4 angeordnet ist, um dieses mit Streiflicht aus einer Richtung 25 zu beleuchten. Die Beleuchtungseinheit 6 umfasst mindestens ein Leuchtmittel 31, welches Licht in einem räumlich beschränkten Lichtkegel 32 emittiert. Begrenzungsstrahlen 33, 34 des Lichtkegels 32 sind eingezeichnet. Ein Zentralstrahl 35 in dem Lichtkegel 32 ist parallel zur Oberflächennormalen 14 der Oberfläche 3 des Dokuments 4 orientiert.

Der Lichtkegel 32 ist auf einen Spiegel 36 gerichtet, welcher einen 45°-Winkel zu dem Zentralstrahl 35 bzw. der Oberflächennormalen 14 der Oberfläche 3 bzw. zur Oberfläche 3 selbst bildet. Das Licht des Lichtkegels 32 wird an diesem reflektiert, wie dies über die Begrenzungsstrahlen 33, 34 angedeutet ist. Wie zu erkennen ist, befindet sich die gesamte Oberfläche 3 des Dokuments 4 in dem sich nach dem Spiegeln ergebenden Beleuchtungslichtkegel 38 und wird somit vollflächig unter streifendem Lichteinfall beleuchtet.

In Fig. 3 ist eine Abwandlung der Beleuchtungseinheit 6 dargestellt, bei der zwischen dem Erfassungsbereich 12 bzw. dem Dokument 4 und dessen Oberfläche 3 und dem Spiegel 36 eine Zylinderlinse 37 angeordnet ist, um die Ausleuchtung homogener zu gestalten. Insbesondere, wenn entlang der Kante 21 (senkrecht zur Zeichnungsebene) des Erfassungsbereichs 12 mehrere Leuchtmittel (oberhalb und/oder unterhalb der Zeichnungsebene) angeordnet sind, weist der Beleuchtungskegel 38 ein homogenes rechteckiges Querschnittsprofil auf.

Es versteht sich, dass die geometrische Ausgestaltung der Beleuchtungseinheiten anders gewählt werden kann.

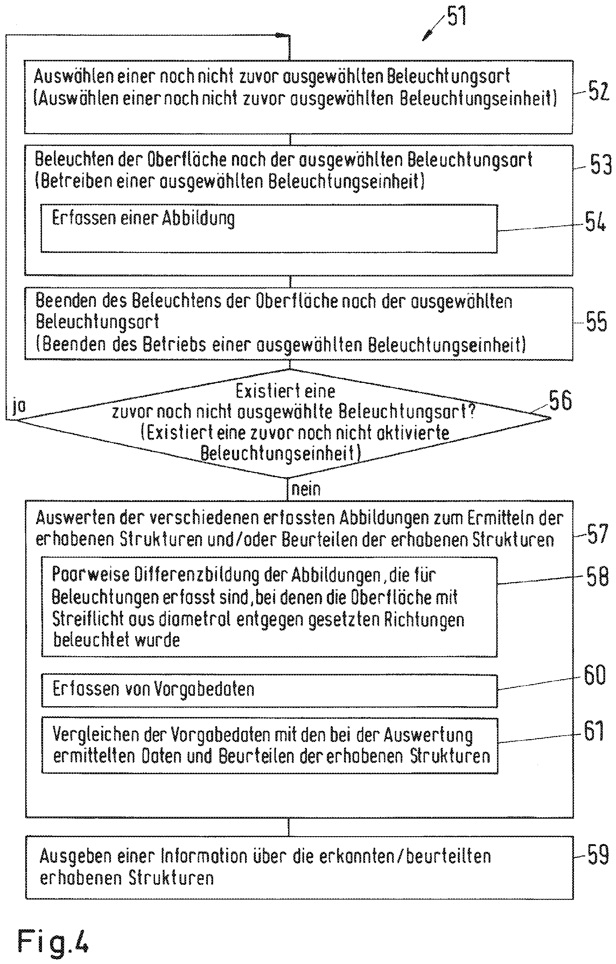

Anhand von Fig. 4, welche ein schematisches Ablaufdiagramm 51 einer Ausführungsform des Verfahrens zum Erkennen und/oder Beurteilen erhabener Strukturen einer Oberfläche eines Dokuments darstellt, soll dieses erläutert werden.

Zunächst wird eine der Beleuchtungsarten oder gemäß der Ausführungsform nach Fig. 1 eine der Beleuchtungseinheiten, beispielsweise die Beleuchtungseinheit 6 der Vorrichtung 1 nach Fig. 1, ausgewählt 52 und anschließend aktiviert, so dass diese die Oberfläche 3 des Dokuments 4 unter streifendem Lichteinfall flächig gemäß der ausgewählten Beleuchtungsart beleuchtet 53. Während dieser Beleuchtung entlang der Richtung 25 wird mittels der Kamera 11 eine Abbildung erfasst 54. Anschließend wird die ausgewählte Beleuchtungseinheit deaktiviert bzw. die Beleuchtung gemäß der gewählten Beleuchtungsart beendet 55.

Nacheinander wird die Dokumentoberfläche in unterschiedlicher Weise beleuchtet. Hierfür werden nacheinander die unterschiedlichen vorhandenen Beleuchtungseinheiten in analoger Weise aktiviert und jeweils während der Beleuchtung eine Abbildung erfasst. Somit erfolgt eine Iteration der Verfahrensschritte 52 - 55, welches über die Abfrage 56 angedeutet ist, in der abgeprüft wird, ob eine Beleuchtungseinheit existiert, die bei der Untersuchung des Dokuments noch nicht aktiviert wurde bzw. eine weitere zuvor noch nicht genutzte Beleuchtungsart existiert. Ist dies der Fall, so wird eine dieser Beleuchtungseinheiten bzw. Beleuchtungsarten ausgewählt 52 und für diese die Verfahrensschritte 53 - 56 erneut durchgeführt.

Es versteht sich für den Fachmann, dass auch andere Beleuchtungen möglich sind, bei denen mehrere Beleuchtungseinheiten in Kombination die Dokumentoberfläche ausleuchten. Ebenso ist es möglich, dass nicht für alle möglichen Beleuchtungsarten, bei denen lediglich eine Beleuchtungseinheit verwendet wird, genutzt und jeweils eine Abbildung erfasst wird.

Die erfassten Abbildungen werden anschließend ausgewertet 57. Beispielsweise ist es vorteilhaft, die Abbildungen, bei denen die Dokumentoberfläche 3 aus diametral entgegen gesetzten Richtungen, beispielsweise 25 und 27 bzw. 26 und 28, unter streifendem Lichteinfall beleuchtet wurde, paarweise mittels einer Differenzbildung 58 auszuwerten. Als Differenzen treten hierbei Reflexionsprojektionen 29, auf der der Beleuchtungseinheit zugewandten Seite der erhabenen Struktur 2 (siehe Fig. 1) und auf der von der Beleuchtungseinheit 6 abgewandten Seite ein Schlagschatten 30 auf. Hierbei wurde für die Darstellung der Reflexionsprojektionen 29 und des Schlagschattens 30 in Fig. 1 davon ausgegangen, dass die Beleuchtung unter streifendem Lichteinfall durch die Beleuchtungseinheit 6 entlang der Richtung 25 erfolgt. Bei der Auswertung werden somit vorzugsweise Reflexionsprojektionen 29 und Schlagschatten 30 isoliert. Hieraus ist es möglich, auf die Erhebungen zurückzuschließen. Bildverarbeitungssoftware, die in der Lage ist, dies zu tun, ist aus dem Stand der Technik bekannt und wird hier nicht näher erläutert.

Anschließend an die Auswertung werden Informationen über die ermittelten Erhebungen ausgegeben 59. Alternativ oder zusätzlich ist es möglich, dass Vorgabedaten erfasst werden 60, welche die auf der Dokumentoberfläche erwarteten Strukturen repräsentieren. Über einen Vergleich 61 dieser erfassten Vorgabedaten mit den aus der Auswertung ermittelten Daten kann eine Beurteilung erfolgen, ob das Dokument als den Qualitätsanforderungen entsprechend angesehen werden kann oder nicht.

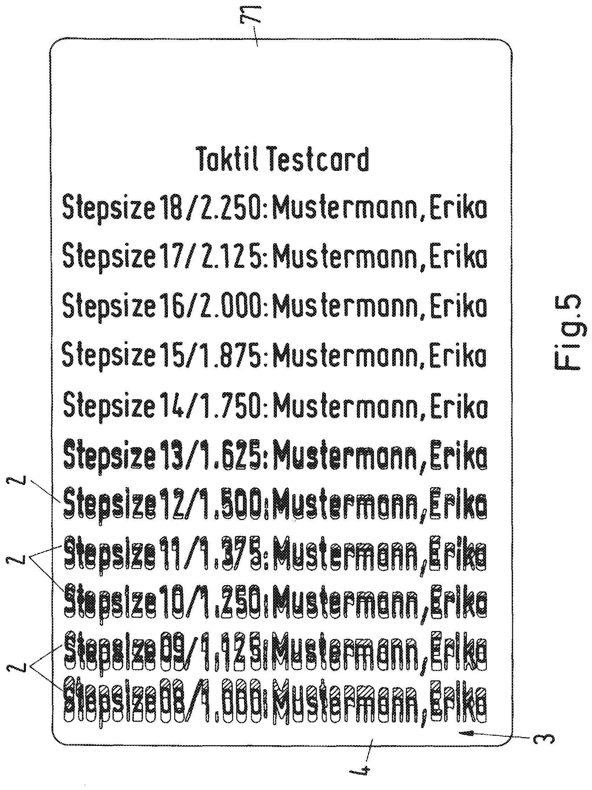

Anhand von Fig. 5 - 7 soll die Auswertung an einem Beispiel veranschaulicht werden.

In Fig. 5 ist die erfasste Abbildung 71 einer Oberfläche 3 eines taktilen Dokuments 4 abgebildet, bei dem eine Taktilität der erhabenen Strukturen 2 von rechts nach links zunimmt. Die links angeordneten Strukturen 2 springen somit am Weitesten aus der Oberfläche 3 des Dokuments 4 hervor.

Die Aufnahme der Abbildung 71 nach in Fig. 5 erfolgte während einer Beleuchtung mit Streiflicht von links.

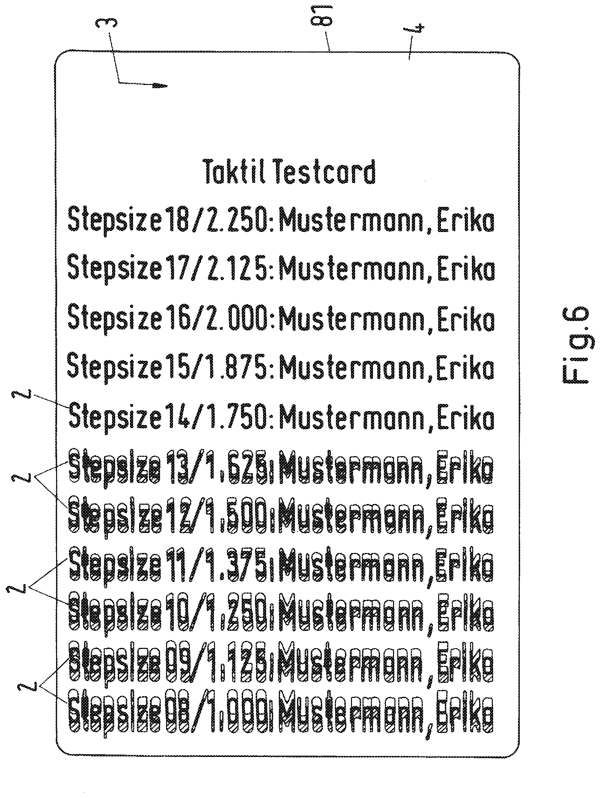

In Fig. 6 ist eine Abbildung 81 derselben Oberfläche 3 desselben Dokuments 4 wie in Fig. 5 dargestellt, wobei diese jedoch während einer Beleuchtung mit Streiflicht von rechts erfasst ist.

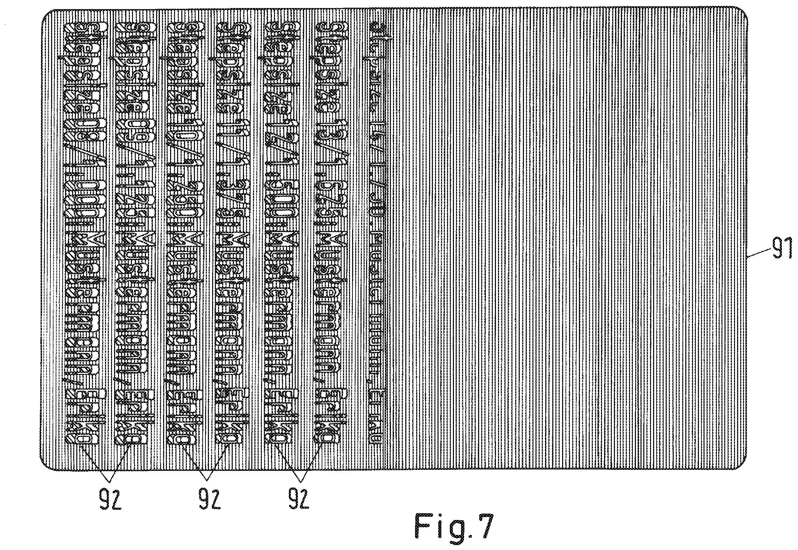

In Fig. 7 ist schließlich eine Differenzabbildung 91 der Abbildungen 71 und 81 der Fig. 5 und 6 dargestellt. Insbesondere im linken Bereich der Differenzabbildung 91 sind die sich ergebenden Merkmale 92 deutlich zu erkennen, welche durch die erhabenen Strukturen 2 der Oberfläche 3 des Dokuments 4 verursacht sind und diese repräsentieren.

Es versteht sich für den Fachmann, dass hier lediglich beispielhafte Ausführungsformen beschrieben sind. Die einzelnen Merkmale der unterschiedlichen Ausführungsformen können beliebig miteinander kombiniert werden, um die Erfindung auszuführen.

### Bezugszeichenliste

- 1: Vorrichtung
- 2: erhabene Struktur
- 3: Oberfläche
- 4: Dokument
- 5: Beleuchtungseinrichtung
- 6 - 10: Beleuchtungseinheiten
- 11: Kamera
- 12: Erfassungsbereich
- 13: zentrale Betrachtungsrichtung
- 14: Oberflächennormale
- 15: Auswerteeinrichtung
- 16: Transporteinrichtung
- 17: Steuereinrichtung
- 21 - 24: Kanten des Erfassungsbereichs
- 25 - 28: Richtungen
- 29: Reflexionsprofil
- 30: Schlagschatten
- 31: Leuchtmittel
- 32: Lichtkegel
- 33, 34: Begrenzungsstrahlen
- 35: Zentralstrahl
- 36: Spiegel
- 37: Zylinderlinse
- 38: Beleuchtungskegel
- 41 - 43: Richtungspfeile
- 51: Ablaufdiagramm
- 52: Auswählen einer noch nicht zuvor ausgewählten Beleuchtungsart (Auswählen einer noch nicht zuvor ausgewählten Beleuchtungseinheit)
- 53: Beleuchten der Oberfläche nach der ausgewählten Beleuchtungsart (aktivieren der ausgewählten Beleuchtungseinheit)
- 54: Erfassen einer Abbildung
- 55: Beenden der Beleuchtung (Deaktivieren der Beleuchtungseinheit)
- 56: Abfrage, ob weitere noch nicht aktivierte Beleuchtungseinheiten / Beleuchtungsarten vorhanden sind
- 57: Auswerten
- 58: Differenzbildung
- 59: Ausgeben von Informationen
- 60: Erfassen von Vorgabedaten
- 61: Vergleichen
- 71: Abbildung (aufgenommen bei Streiflicht von links)
- 81: Abbildung (aufgenommen bei Streiflicht von rechts)
- 91: Differenzabbildung
- 92: Merkmalle (die die erkannten erhabenen Strukturen repräsentieren)

## Patentansprüche

1. Verfahren zur Erkennung dreidimensionaler erhabener Strukturen (2) auf einer Oberfläche (3) eines Dokuments (4) umfassend die Schritte:
Beleuchten der Oberfläche (3) mit Licht;
Erfassen einer Abbildung der Oberfläche (3), während die Oberfläche (3) beleuchtet wird,
und Auswerten der erfassten Abbildung zum Ermitteln der erhabenen Strukturen (2),
wobei die Oberfläche (3) auf mindestens zwei unterschiedliche Arten flächig beleuchtet wird und für jede der unterschiedlichen Beleuchtungsarten mindestens eine flächige Abbildung (71, 81) der Oberfläche (3) erfasst wird und die mehreren so erfassten flächigen Abbildungen (71, 81) der Oberfläche (3) gemeinsam ausgewertet und bei der Auswertung Schlagschatten (30) und/oder Reflexionsprofile (29) isoliert werden,
**dadurch gekennzeichnet, dass**
eine der unterschiedlichen Beleuchtungsarten mindestens eine Beleuchtung ist, bei der die Oberfläche (3) mit diffusem Licht vollflächig gleichmäßig ausgeleuchtet wird, so dass in einer bei der Beleuchtung mit dieser einen der unterschiedlichen Beleuchtungsarten erfassten Abbildung weder Schlagschatten noch Reflexionsprofile erscheinen.

2. Verfahren nach Anspruch 1, **dadurch gekennzeichnet, dass** die Oberfläche (3) auf unterschiedliche Arten beleuchtet wird, indem die Oberfläche (3) aus unterschiedlichen Richtungen (25-28) mit Licht unter streifendem Einfallswinkel beleuchtet wird.

3. Verfahren nach einem der vorangehenden Ansprüche, **dadurch gekennzeichnet, dass** beim Auswerten jeweils mindestens zwei der unterschiedlichen Abbildungen (71, 81) miteinander verglichen werden, um anhand der erfassten Unterschiede die erhabenen Strukturen zu ermitteln.

4. Vorrichtung zur Erkennung von dreidimensionalen erhabenen Strukturen auf einer Oberfläche (3) eines Dokuments (4) umfassend:
eine Beleuchtungseinrichtung (5):
eine Kamera zum Erfassen einer flächigen Abbildung der Oberfläche (3) des Dokuments (4), und eine Auswerteeinrichtung (15) zum Auswerten der erfassten Abbildung (71, 81) und Ermitteln der erhabenen Strukturen, wobei die Beleuchtungseinrichtung (5) und die Kamera (11) so zueinander ausgerichtet sind, dass die Kamera (11) die Abbildung (71, 81) während der Beleuchtung der Oberfläche (3) durch die Beleuchtungseinrichtung (5) erfassen kann,
wobei die Beleuchtungseinrichtung (5) ausgebildet ist, die Oberfläche (3) auf mindestens zwei unterschiedliche Arten jeweils flächig zu beleuchten und die Kamera (11) ausgebildet ist, während der unterschiedlichen Beleuchtungen jeweils mindestens eine flächige Abbildung (71, 81) der Oberfläche (3) zu erfassen und die Auswerteeinrichtung (15) ausgebildet ist, die unterschiedlichen Abbildungen (71, 81) gemeinsam auszuwerten
**dadurch gekennzeichnet, dass**
eine Beleuchtungseinheit (10) ausgebildet und angeordnet ist, diffuses Licht zu erzeugen und die Oberfläche (3) des Dokuments (4) in einer Beleuchtungsart vollflächig diffus gleichmäßig auszuleuchten, so dass in einer mit der Kamera (11) bei der Beleuchtung mit dieser einen Beleuchtungsart erfassten Abbildung weder Schlagschatten noch Reflexionsprofile erscheinen.

5. Vorrichtung nach Anspruch 4, **dadurch gekennzeichnet, dass** die Beleuchtungseinrichtung (5) mehrere Beleuchtungseinheiten (6 - 10) umfasst, mittels deren isolierten Betriebs jeweils eine der Beleuchtungsarten bewirkbar ist.

6. Vorrichtung nach Anspruch 5, **dadurch gekennzeichnet, dass** zumindest einige der mehreren Beleuchtungseinheiten (6 - 9) entlang verschiedener Kanten (21 - 24) eines Erfassungsbereichs (12) der Kamera (11), in dem sich das Dokument (4) während der Beleuchtung und Abbildungserfassung befindet, angeordnet sind und diese so ausgebildet sind, diese jeweils die Oberfläche (3) des Dokuments (4), wenn es sich in dem Erfassungsbereich (12) der Kamera (11) befindet, flächig mit Licht unter streifendem Einfallswinkel aus einer Richtung (25 - 29) zu beleuchten.

7. Vorrichtung nach einem der Ansprüche 4 bis 6, **dadurch gekennzeichnet, dass** die zumindest einigen der mehreren Beleuchtungseinheiten (6 - 9) jeweils eine Optik umfassen, die ein Profil eines Beleuchtungskegels (38) formt.

## Claims

1. Method for detecting three-dimensional elevated structures (2) on a surface (3) of a document (4), comprising the steps:
Illuminating the surface (3) with light;
capturing an image of the surface (3) during the illumination of the surface (3), and evaluating the captured image to ascertain the elevated structures (2),
wherein the surface (3) is illuminated areally in at least two different ways and at least one areal image (71, 81) of the surface (3) is captured for each of the different illumination ways, and the plurality of areal images (71, 81) of the surface (3) thus captured are evaluated together, and during the evaluation drop shadows (30) and/or reflection profiles (29) are isolated,
**characterised in that**
one of the different illumination ways is at least an illumination with which the surface (3) is uniformly illuminated full-surface with diffuse light, such that neither drop shadows nor reflection profiles appear in an image which is captured during the illumination with this one of the different types of illumination.

2. Method according to claim 1, **characterised in that** the surface (3) is illuminated in different ways, **in that** the surface (3) is illuminated from different directions (25-28) with light under a grazing incidence angle.

3. Method according to any one of the preceding claims, **characterised in that**, during the evaluation in each case at least two of the different images (71, 81) are compared with one another, in order, on the basis of the differences detected, to ascertain the elevated structures.

4. Apparatus for detecting three-dimensional elevated structures on a surface (3) of a document (4),
comprising:
An illumination device (5);
a camera for detecting an areal image of the surface (3) of the document (4) and an evaluation device (15) for evaluating the captured image (71, 81) and ascertaining the elevated structures, wherein the illuminating device (5) and the camera (11) are aligned with one another in such a way that the camera (11) can detect the image (71, 81) during the illumination of the surface (3) by the illumination device (5),
wherein the illumination device (5) is configured such as to illuminate the surface (3) in at least two different ways, in each case by areal illumination, and the camera (11) is configured such as to detect, during the different illuminations, in each case at least one areal image (71, 81) of the surface (3), and the evaluation device (15) is configured such as to evaluate the different images (71, 81) together,
**characterised in that**
an illumination unit (10) is configured and arranged such as to produce diffuse light, and to illuminate the surface (3) of the document (4) in a full-surface, diffuse, and uniform type of lighting, such that, in an image captured by the camera (11) with illuminating with this type of illumination, neither drop shadows nor reflection profiles appear.

5. Apparatus according to claim 4, **characterised in that** the lighting device (5) comprises a plurality of lighting units (6-10), by means of the isolated operation of which, in each case, one of the types of illumination can be put into effect.

6. Apparatus according to claim 5, **characterised in that** at least some of the plurality of lighting units (6-9) are arranged along different edges (21-24) of a detection region (12) of the camera (11), in which the document (4) is located during the illumination and image capturing, and these are configured in such a way that in each case they areally illuminate the surface (3) of the document (4) when it is in the detection region (12) of the camera (11), with light under a grazing angle of incidence from a direction (25-29).

7. Apparatus according to any one of claims 4 to 6, **characterised in that** at least some of the plurality of lighting units (6-9) comprise in each case a lens, which forms a profile of an illuminating cone (38).

## Revendications

1. Procédé de détection de structures en relief tridimensionnelles (2) sur une surface (3) d'un document (4), comprenant les étapes consistant à :
éclairer une surface (3) avec de la lumière ;
capturer une représentation de la surface (3) pendant que la surface (3) est éclairée,
et évaluer la représentation capturée pour déterminer les structures en relief (2), dans lequel toute la surface (3) est éclairée d'au moins deux manières différentes et, pour chacune des manières différentes d'éclairage, au moins une représentation plane (71, 81) de la surface (3) est capturée et les plusieurs représentations planes ainsi capturées (71, 81) de la surface (3) sont évaluées conjointement et, lors de l'évaluation, des ombres portées (30) et/ou des profils de réflexion (29) sont isolés,
**caractérisé en ce que**
une des manières différentes d'éclairage est au moins un éclairage avec lequel toute la surface (3) est illuminée uniformément avec une lumière diffuse de sorte que, dans une représentation capturée dans le cas de l'éclairage avec une des manières différentes d'éclairage, ni ombres portées ni profils de réflexion n'apparaissent.

2. Procédé selon la revendication 1, **caractérisé en ce que** la surface (3) est éclairée de manières différentes **en ce que** la surface (3) est éclairée à partir de différentes directions (25-28) avec une lumière selon un angle d'incidence rasant.

3. Procédé selon l'une quelconque des revendications précédentes, **caractérisé en ce que**, lors de l'évaluation, respectivement au moins deux des représentations différentes (71, 81) sont comparées entre elles pour déterminer les structures en relief à l'aide des différences capturées.

4. Dispositif de détection de structures en relief tridimensionnelles sur une surface (3) d'un document (4) comprenant :
un système d'éclairage (5) :
une caméra pour capturer une représentation plane de la surface (3) du document (4), et un système d'évaluation (15) pour évaluer la représentation capturée (71, 81) et déterminer les structures en relief, dans lequel le système d'éclairage (5) et la caméra (11) sont orientés l'un par rapport à l'autre de sorte que la caméra (11) peut capturer la représentation (71, 81) pendant l'éclairage de la surface (3) par le système d'éclairage (5),
dans lequel le système d'éclairage (5) est conçu pour éclairer respectivement toute la surface (3) selon au moins deux manières différentes et la caméra (11) est conçue pour capturer, durant les éclairages différents respectivement au moins une représentation plane (71, 81) de la surface (3) et le système d'évaluation (15) est conçu pour évaluer conjointement les différentes représentations (71, 81),
**caractérisé en ce que**
une unité d'éclairage (10) est conçue et disposée pour générer une lumière diffuse et illuminer toute la surface (3) du document (4) uniformément de manière diffuse selon une manière d'éclairage de sorte que, dans une représentation capturée avec la caméra (11) avec l'éclairage de cette manière d'éclairage, ni ombres portées ni profils de réflexion n'apparaissent.

5. Dispositif selon la revendication 4, **caractérisé en ce que** le système d'éclairage (5) comprend plusieurs unités d'éclairage (6-10) au moyen du fonctionnement isolé desquelles une des manières d'éclairage respectivement peut être active.

6. Dispositif selon la revendication 5, **caractérisé en ce qu'**au moins certaines des plusieurs unités d'éclairage (6-9) sont disposées le long de différents bords (21-24) d'une zone de capture (12) de la caméra (11), dans laquelle le document (4) se trouve durant l'éclairage et la capture de représentations, et celles-ci sont conçues de manière à éclairer respectivement toute la surface (3) du document (4), lorsqu'il se trouve dans la zone de capture (12) de la caméra (11), avec une lumière sous un angle d'incidence rasant depuis une direction (25-29).

7. Dispositif selon l'une quelconque des revendications 4 à 6, **caractérisé en ce que** les au moins certaines des nombreuses unités d'éclairage (6-9) comportent respectivement une optique qui forme un profil d'un cône d'éclairage (38).
